# EUROPÄISCHE PATENTSCHRIFT

(11) **EP 1 799 390 B1**
(45) Veröffentlichungstag und Bekanntmachung des Hinweises auf die Patenterteilung: **30.10.2013**
(21) Anmeldenummer: 05766117.5
(22) Anmeldetag: 19.07.2005
(51) Int. Cl.: B23K 20/12

(54) **FUTTER ZUR HALTERUNG VON BEFESTIGUNGSELEMENTEN FÜR EINE REIBSCHWEISSVERBINDUNG**
CHUCK FOR RETAINING FIXING ELEMENTS FOR A FRICTION WELDED CONNECTION
MANDRIN POUR SERRER DES ELEMENTS DE FIXATION POUR UNE LIAISON DE SOUDAGE PAR FRICTION

(30) Priorität: 13.08.2004 DE 102004039398
(43) Veröffentlichungstag der Anmeldung: 27.06.2007
(73) Patentinhaber: EJOT GmbH & Co. KG, 57334 Bad Laasphe (DE)
(72) Erfinder: MAUER, Dieter, 35457 Lollar (DE)
(74) Vertreter: Bardehle, Heinz
(86) Internationale Anmeldenummer: PCT/EP2005/007852
(87) Internationale Veröffentlichungsnummer: WO 2006/018091

(56) Entgegenhaltungen:
- WO-A-03/043772
- GB-A- 769 596
- US-A- 4 735 353
- US-A- 5 798 494

## Beschreibung

Die Erfindung bezieht sich auf ein Futter zur Halterung von jeweils mit einer radialen Druckfläche und einem Mitnahmeprofil versehenen Befestigungselementen für eine Reibschweißverbindung an einem Bauteil und zur Übertragung von auf ein Befestigungselement wirkenden Rotations- und Druckkräften, wobei in dem Futter zur Übertragung der Rotationskraft eine ein Mehrkantprofil aufweisende Ringaufnahme vorgesehen ist, die das ein axiales Mehrkantprofil aufweisendes, eingeführtes Befestigungselement satt umfasst.

Ein derartiges Futter ist der US-Patentschrift 4,735,353 dargelegt und beschrieben. Dabei handelt es sich um ein tragbares Handschweißgerät, dem die einzelnen zu verschweißenden Bolzen von Hand in das Futter einzeln eingesetzt werden.

Es ist weiterhin aus der US-Patentschrift 4,850,772 ein Futter für Bolzen dargestellt und beschrieben, die für den Vorgang des Reibschweißens gestaltet sind. Das bekannte Futter dient zur Umfassung eines Gewindebolzens, der mit seiner Stirnseite eine Fläche bildet, die durch Reibschweißen mit dem betreffenden Bauteil zu verbinden ist. Der Bolzen besitzt einen von der Stirnseite beabstandeten Flansch, der zur Übertragung der Rotationskraft und der Druckkraft gestaltet ist, und zwar derart, dass seine der Stirnseite abgewandte Seite leicht konisch ausgebildet und mit aufeinander folgenden Wellen versehen ist, die mit ihren Kämmen radial ausgerichtet sind. Diese derart gerichteten Wellen bilden zusammen den erwähnten Konus und sollen zur Aufnahme in einem entsprechend geformten Futter dienen, das dann über die Wellen die Rotationskraft und über die radiale Erstreckung des Flansches die Druckkraft aufnehmen und diese über den Schaft des Bolzen auf dessen Stirnseite zum Reibschweißen übertragen. Da bei dem dem Bolzen zugrunde liegenden Reibschweißverfahren sowohl erhebliche Rotationskräfte als auch Druckkräfte angewendet werden müssen, kann die wellenförmige Gestaltung der genannten Fläche des Flansches dazu führen, dass die Abschrägungen der einzelnen Wellen dem Futter einer verwendeten Reibschweißvorrichtung die Tendenz geben, rhythmisch von dem Flansch weggedrängt zu werden, was zu einer vor allem in Axialrichtung verlaufenden Rüttelbewegung führen kann, die für den Reibschweißvorgang schädlich ist, die auf den Bolzen wirkenden Rotations- und Druckkräfte werden gemeinsam von einem eine zentrale Bohrung aufweisenden Druckstück aufgebracht. In der Bohrung des Druckstücks ist der Bolzen eingeschoben, bis sein Flansch auf eine Stirnseite der Druckstücks trifft, die an die betreffende Seite des Flansches angepasst ist, also ebenfalls konisch ausgebildet und mit Wellen versehen ist. Dabei passen die Wellen des Druckstücks in die Welle des Flansches. Abgesehen davon, dass die die Rotations- und Druckkräfte aufnehmende Gestaltung des Flansches zu dem vorstehend erwähnten Problem des Entstehens einer Rüttelbewegung führen kann, ist das bekannte Futter nur zur Einzelverarbeitung von Bolzen geeignet, da jeder durch Reibschweißen an einem Bauteil zu befestigende Bolzen in das Futter von Hand entgegen der späteren Druckrichtung eingeführt werden muss. Für eine automatische Zuführung von Bolzen ist dieses Futter also nicht geeignet, was einen weiteren Nachteil des bekannten Futters bildet.

Der Erfindung liegt die Aufgabe zugrunde, ein Futter gemäß den obigen Angaben für die Halterung von Befestigungselementen für eine Reibschweißverbindung zu schaffen, bei dem einerseits eine automatische Zuführung von Befestigungselementen möglich ist, außerdem das Einbringen der Rotationskraft und der Druckkraft in einer Weise geschieht, das die Führung des jeweiligen Befestigungselementes sowohl in Axialrichtung der Druckkraft als auch diese selbst besonders genau dosiert werden können, um eine Reibschweißverbindung zu ermöglichen, die bei sicherer Verschweißung nur in möglichst geringem Umfang Material vom Befestigungselement und dem Bauteil abträgt, so dass insbesondere dünne Bauteile, also insbesondere dünne Bleche, für eine Reibschweißverbindung geeignet sind. Erfindungsgemäß geschieht dies dadurch, dass das Futter ein in der Ringaufnahme rückziehbares Druckstück aufweist, das von der Ringaufnahme geführt ist, wobei an die seitliche Öffnung ein Zuführkanal angeschlossen ist, und der Zuführkanal und die Ringaufnahme ein Mehrkantprofil für ein Befestigungselement aufweisen, das von in Abstand vom Ende des Zuführkanals vorgesehenen Stoppteilen in einer Wartelage aufhaltbar ist, wobei die Stoppteile mit einer konischen Auflagefläche für ein zugeführtes, in der Wartelage gehaltenes Befestigungselement versehen sind und beim Verschieben eines Reibelementes in die Reibschweißposition von dem Befestigungselement seitlich weggedrückt werden, und dass für die Verschiebung des Druckstücks ein axial in der Ringaufnahme verschiebbarer, nicht verdrehbarer Stößel vorgesehen ist, der in das Druckstück auf dessen dem Befestigungselement abgewandten Seite axial mitnahmesicher und lösbar eingreift, und dass das Druckstück mit Erreichen der Reibschweißposition des Befestigungselementes sich mit der Ringaufnahme derart verriegelt, dass die Ringaufnahme die auf diese wirkenden Rotationskräfte zusammen mit den Druckkräften auf das Druckstück überträgt, wobei der Stößel von dem Druckstück gelöst ist.

In dem erfindungsgemäßen Futter werden zur Aufbringung einerseits der Rotationskraft und andererseits der Druckkraft jeweils ein eigenes Werkzeugelement verwendet, nämlich für die Rotationskraft die Ringaufnahme, die an ein axiales Mehrkantprofil des von dem Futter erfassten Befestigungselementes angepasst ist und die dieses Mehrkantprofil satt umfasst. Die Druckkraft wird von einem in der Ringaufnahme wegziehbaren Druckstück aufgebracht, das in der Ringaufnahme geführt ist. In dieser Ringaufnahme lässt sich das Druckstück soweit zurückziehen, dass jeweils ein neues zu verarbeitendes Befestigungselement durch eine seitliche Öffnung an der Ringaufnahme in dieses eingeführt werden kann, ohne dass es dabei von dem Druckstück, das bis hinter die Öffnung zurückgezogen werden kann, behindert wird. Bei diesem Mehrkantprofil kann es sich z. B. um ein Sechskantprofil handeln, wie dies z. B. bei Sechskantbolzen und Sechskantmuttern üblicherweise Verwendung findet. Es ist aber natürlich auch ein anderes Mehrkantprofil, insbesondere ein Vierkantprofil verwendbar. Für den Reibschweißvorgang wird dann das Druckstück innerhalb der Ringaufnahme gegen das Befestigungselement gedrückt, das für die Aufnahme der Druckkräfte die erwähnte radiale Druckfläche aufweist. Durch diese Gestaltung wird erreicht, dass die Einbringung der Rotationskraft und der Druckkraft jeweils individuell erfolgt und damit entsprechend genau einstellbar ist, da die jeweilige Einstellung nicht durch die jeweils andere Kraft irgendwie beeinträchtigt werden kann. Damit dabei ein eingeführtes Befestigungselement in seiner Wartelage für die Reibschweißverbindung gehalten wird, sind in der Ringaufnahme radial nach innen ragende rückziehbare Stoppteile vorgesehen, die das durch die seitliche Öffnung an der Ringaufnahme eingeführten Befestigungselement auffangen und bis zur Verarbeitung festhalten.

Um einem in das Futter eingeführten Befestigungselement in der Ringaufnahme eine sichere Halterung zu geben, gestaltet man diese zweckmäßig so, das sie ihre Umfassungsöffnung in Richtung vom Druckstück weg bis zur Anlage an das Befestigungselement verengt. Ein in die Umfassungsöffnung mit seinem Mitnahmeprofil hineingleitendes Befestigungselement wird dann durch die Anlage der Ringaufnahme an das Mitnahmeprofil in axialer Richtung sicher gehalten, sodass sich der folgende Reibschweißvorgang genau zentriert abspielen kann.

Um auch bei zurückgezogenen Stoppteilen vor Beginn des eigentlichen Reibschweißvorganges einem in dem Futter befindlichen Befestigungselement eine gewisse Halterung in dem Futter zu geben, versieht man das Druckstück zur Verarbeitung von bolzenartigen Befestigungselementen im Bereich seiner Bohrung mit in diese teilweise hineinragenden Klemmstücken, die einen von der Bohrung aufgenommenen Schaft des Befestigungselementes in der Wartelage leicht lösbar einklemmen. Zur Verarbeitung eines mutterartigen Befestigungselementes versieht man das Druckstück mit einem axial vorspringenden Zapfen, der bei Andrücken des Druckstücks an das Befestigungselement in der Wartelage mit einem stößelartigen Klemmstück in das Gewindeloch des mutterartigen Befestigungselementes hineinragt und sich in diesem lösbar einklemmt. Beide Ausführungsformen lassen dann ein Wegziehen des betreffenden Befestigungselementes problemlos zu, da, wie gesagt, es sich bei der Haltefunktion des betreffenden Klemmstücks um eine lösbare Einklemmung handelt.

Um die Stoppteile so verschieben zu können, dass sie ein von ihnen zurückgehaltenes Befestigungselement freigeben, versieht man die Stoppteile zweckmäßig mit einer konischen Auflagefläche für ein zugeführtes Befestigungselement, über die das Befestigungselement unter seitlichem Wegdrücken der Stoppteile beim Verschieben des Befestigungselementes in die Reibschweißposition gleitet. Bei Aufsetzen des Druckstücks auf die radiale Druckfläche des betreffenden Befestigungselementes ergibt sich dann wegen der konischen Auflagefläche an den Stoppteilen eine radial auswärts gerichtete Kraftkomponente, die die Stoppteile wegdrückt und damit den weiteren Weg für das Befestigungselement zur Reibschweißposition freigibt.

Um den dem Futter zugeführten Befestigungselementen mit ihrem Mitnahmeprofil beim Zuführvorgang zu dem Futter bereits frühzeitig eine Lage zu geben, aus der sie ungehindert in die Ringaufnahme eingleiten können, kann man an die seitliche Öffnung an der Ringaufnahme einen Zuführkanal anschließen, der unter stetiger Verengung seines Innenraumes bis zur Anpassung an das Mehrkantprofil der Ringaufnahme übergeht. Auf diese Weise erhalten die im Zuführkanal in Richtung zu dem Futter gleitenden Befestigungselemente schon frühzeitig eine Winkellage, in der sie dann ungehindert in die Ringaufnahme mit deren dem Mehrkantprofil der Befestigungselemente angepassten Gestaltung eingleiten können.

Um bei dem Reibschweißvorgang, dem eine Steuerung der Rotationsgeschwindigkeit des Befestigungselementes zugrunde liegt, die Trägheitsmomente der dabei in Drehung versetzten Bauteile möglichst gering zu halten, gestaltet man das Futter zweckmäßig so, dass für die Verschiebung des Druckstücks ein axial in der Ringaufnahme verschiebbarer, nicht verdrehbarer Stößel vorgesehen ist, der in das Druckstück auf dessen dem Befestigungselement abgewandten Seite axial mitnahmesicher und lösbar eingreift, und dass das Druckstück mit Erreichen der Reibschweißposition des Befestigungselementes sich mit der Ringaufnahme derart verriegelt, dass die Ringaufnahme die auf diese wirkenden Rotationskräfte zusammen mit den Druckkräften auf das Druckstück überträgt, wobei der Stößel von dem Druckstück gelöst ist.

In den Figuren ist ein Ausführungsbeispiel der Erfindung dargestellt. Es zeigen:
- Figur 1: das Futter zusammen mit seinem Antriebsmechanismus;
- Figur 2a - d: das Futter allein für die Verarbeitung eines bolzenartigen Befestigungselementes in seinen einzelnen Betriebsphasen von der Zuführung bis zum Reibschweißen eines Befestigungselementes;
- Figur 3a - c: das Futter allein für die Verarbeitung eines mutterartigen Befestigungselementes in drei Arbeitspositionen von bereits eingeführten Befestigungselementen zum Reibschweißen des Befestigungselementes;
- Figur 4: das Druckstück mit einem vorspringenden Zapfen zum Halten eines mutterartigen Befestigungselementes;
- Figur 5: eine vergrößerte Darstellung des Endes der Ringaufnahme zum Umfassen eines eingeführten Befestigungselementes,
- Figur 6a: ein hinsichtlich der in Drehung versetzten Massen besonders gestaltetes Futter zusammen mit seinem Antriebsmechanismus und zwar mit einem Befestigungselement in der Wartelage;
- Figur 6b: das Futter mit seinem Antriebsmechanismus in der Phase vor der Überführung eines von dem Druckstück aufgenommenen Befestigungselementes in die Reibschweißposition;
- Figur 6c: das Futter mit seinem Antriebsmechanismus mit in die Reibschweißposition überführtem Befestigungselement;
- Figur 7: das Druckstück in perspektivischer Sicht aus dem in Figuren 6a bis 6c dargestellten Futter;
- Figur 8: den Verriegelungsmechanismus zwischen Futter und Ringaufnahme im Schnitt;
- Figur 9: eine Gesamtansicht der Anordnung mit seitlich angebrachtem Antriebsmechanismus;
- Figur 10: eine Vorrichtung entsprechend derjenigen gemäß Figur 6a für die Verarbeitung von durch Muttern gebildeten Befestigungselementen.

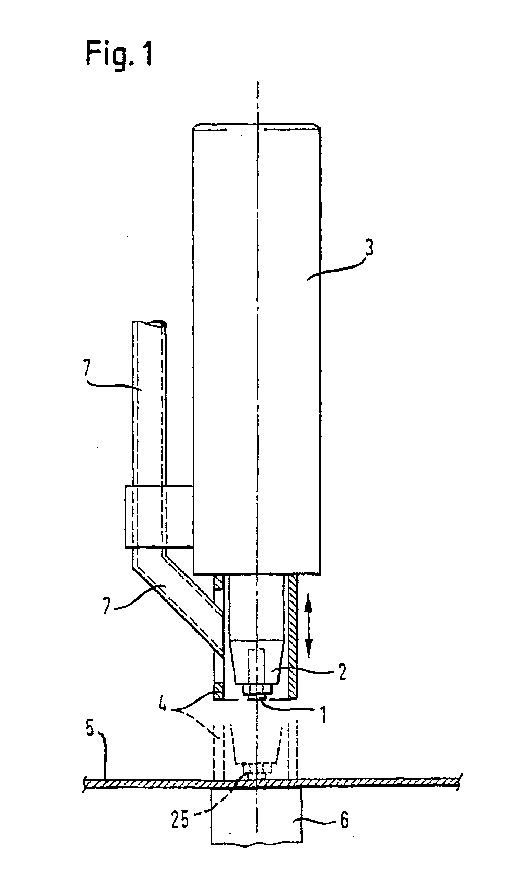

Figur 1 zeigt eine Vorrichtung zum Reibschweißen des Befestigungselementes 1 in prinzipieller Darstellung, die das Futter 2 aufweist, das von dem Antriebsmechanismus 3 angetrieben wird. Der Antriebsmechanismus 3 selbst ist nicht Gegenstand der vorliegenden Erfindung und daher nur in grundsätzlicher Darstellung als ein Baustein der Vorrichtung gezeigt. Das Futter 2 ist von dem Niederhalter 4 umgeben, der zusammen mit dem Futter 2 auf das Bauteil 5 absenkbar ist und dieses während des Reibschweißvorganges in bekannter Weise gegen das Widerlager 6 drückt. Dem Futter 2 werden nacheinander die zu verarbeitenden Befestigungselemente über das Rohr 7 zugeführt, das schräg von der Seite her in das Futter 2 einmündet, worauf weiter unten im Einzelnen näher eingegangen wird. Eine ins Einzelne gehende Darstellung der Vorrichtung ist in der deutschen Patentanmeldung 10 2004 034 498.1 enthalten, auf die hiermit Bezug genommen wird.

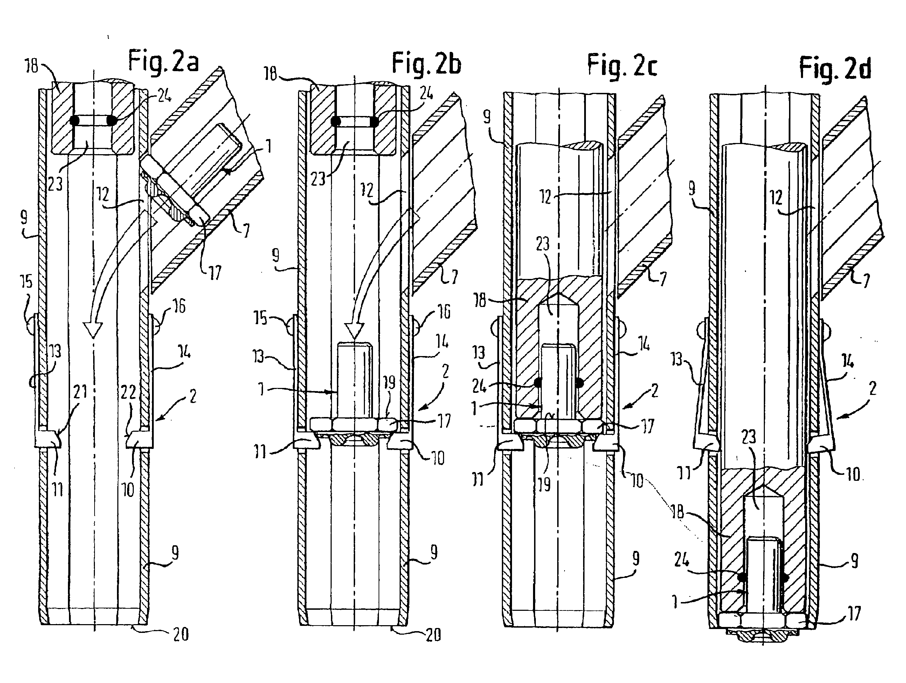

In den Figuren 2a bis d ist das Futter 2 mit seinen für die Verarbeitung von bolzenartigen Befestigungselementen 1 in den einzelnen Betriebsphasen dargestellt.

Das Futter 2 weist die Ringaufnahme 9 auf, die sich über eine solche Länge erstreckt, dass jeweils ein neues Befestigungselement 1 durch das schräg in die Ringaufnahme 9 einmündende Rohr 7 zugeführt werden kann, das aus der Betriebslage gemäß Figur 2a in die Betriebslage gemäß Figur 2b gleitet, wo es von den Stoppteilen 10 und 11 in einer Wartelage gehalten wird. Für diese Zuführung der Befestigungselemente ist in der Ringaufnahme 9 die seitliche Öffnung 12 eingearbeitet, die sich mit geringem Abstand an das Ende des Rohres 8 anschließt, wobei dieses Ende des Rohres 7 von der Wandung der Ringaufnahme 9 einen geringen Abstand einhält, da bei der weiteren Verarbeitung die Ringaufnahme 9 beim Reibschweißvorgang in Rotation versetzt wird.

Die beiden Stoppteile 10 und 11 sind über die Federelemente 13 und 14 mittels Nieten 15 und 16 an der Ringaufnahme 9 befestigt. Die Federelemente 13 und 14 gestatten den Stoppteilen 10 und 11 ein seitliches Ausweichen (siehe Figur 2d), um das in der Wartelage gehaltene Befestigungselement 1 (siehe Figur 2b) freizugeben, aus der es in die Reibschweißposition gemäß Figur 2d überführbar ist.

Das in den Figuren 2a - d dargestellte Futter, ist, wie gesagt, für die Verarbeitung von bolzenartigen Befestigungselementen 1 vorgesehen, die ein sechskantiges axiales Mehrkantprofil 17 aufweisen, also insoweit einem Sechskantbolzen entsprechen. Dieses Mehrkantprofil ist auch für die Ringaufnahme 9 vorgesehen, ebenfalls auch für das Rohr 7 für die Zuführung von neuen Befestigungselementen, so dass diese von dem Rohr 7 her bereits in einer für die Übernahme in die Ringaufnahme 9 richtigen Orientierung hinsichtlich ihres Drehwinkels zugeführt und in der Ringaufnahme 9 gehalten werden.

Ausgehend von der Wartelage gemäß Figur 2b, in der das Befestigungselement von den Stoppteilen 10 und 11 zunächst gehalten wird, geht das Futter 2 nunmehr in die in Figur 2c dargestellte Position über, in der das Druckstück 18, das zunächst gemäß den Figuren 2a und 2b in einer zurückgezogenen Lage gehalten wurde, auf das Befestigungselement 1 abgesenkt wird. Das Druckstück 18 trifft dabei auf die radiale Druckfläche 19 des Befestigungselementes 1 und drückt dieses in Richtung zu dem unteren Ende 20 der Ringaufnahme 9. Dabei werden die Stoppteile 10 und 11 seitlich weggedrückt, da sie mit den im Prinzip konischen Auflageflächen 21 und 22 (siehe Figur 2a) verzügen, auf die der Rand des Mehrkantprofils 17 drückt und dabei die Stoppteile nach außen schwenkt (siehe Figur 2d), was durch die Federelemente 13 und 14 ermöglicht wird. Bei diesem Absenken des Druckstücks 18 auf das Befestigungselement 1 umfasst das Druckstück mit seiner Bohrung 23 den Schaft des Befestigungselementes 1 und hält diesen lösbar fest, und zwar durch das im Druckstück 18 im Bereich seiner Bohrung 23 enthaltene Klemmstück 24, das hier als ein dehnbarer Gummiring ausgebildet ist, der in einer entsprechenden Nut in der Wandung der Bohrung 23 untergebracht ist und beim Aufdrücken des Druckstücks 18 auf den Schaft des Befestigungselementes 1 etwas nachgibt und unter seiner Spannung das Befestigungselement 1 lösbar festhält.

Das Ende der Absenkbewegung des Druckstücks 18 ist in der Figur 2d dargestellt. Das Druckstück 18 drückt jetzt mit seiner Stirnfläche mit erheblichem axialen Druck auf die Druckfläche 19 (siehe Figur 2b) des Befestigungselementes 1, wobei gleichzeitig die Ringaufnahme 9 in Drehung versetzt wird, so dass sich nunmehr der aus Figur 1 in prinzipieller Weise ersichtliche Reibschweißvorgang anschließt, bei dem die notwendigen Druckkräfte und Rotationskräfte von dem in Figur 1 dargestellten Antriebsmechanismus 3 aufgebracht werden. Diese Reibschweißposition 25 des Futters 2 ist in Figur 1 in gestrichelter Linienführung dargestellt.

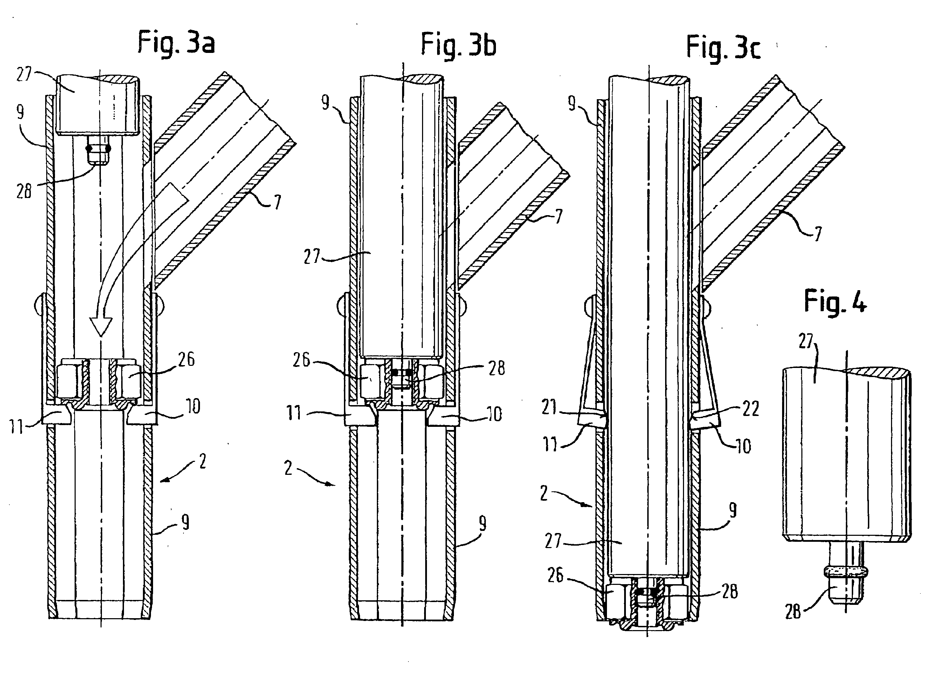

In den Figuren 3a bis c ist das prinzipiell gleiche Futter 2 dargestellt, das allerdings für die Verarbeitung von mutterartigen Befestigungselementen gestaltet ist. An die Ringaufnahmen 9 ist das Rohr 7 der Zuführung von mutterartigen Befestigungselementen angeschlossen, und zwar mit einer Weise, wie dies im Zusammenhang mit der Figur 2a erläutert ist. Figur 3a zeigt das Futter 9 mit einem mutterartigen Befestigungselement 26 in der Wartelage, in der das Befestigungselement 26 auf den beiden Stoppteilen 10 und 11 aufliegt. Die Stoppteile 10 und 11 werden dann bei Druck des Druckstücks 27 auf die rückwärtige Fläche des Befestigungselementes 26, also deren radiale Druckfläche weggedrückt und damit das Befestigungselement 26 freigeben. Das Befestigungselement 26 wird dann in der in Figur 3c dargestellten Endlage von der Ringaufnahme 9 festgehalten, woraufhin dann die von dem Antriebsmechanismus 3 (siehe Figur 1) aufgebrachten Druck- und Rotationskräfte auf das Befestigungselement 26 wirken und dieses damit in der Reibschweißposition mit einem Bauteil 5 verbinden.

Damit nach Einführen eines Befestigungselementes 26 in die Ringaufnahme 9 während des Verschiebevorganges von der in Figur 3b dargestellten Wartelage in die in Figur 3c dargestellte Reibschweißposition das Befestigungselement lösbar gehalten wird (siehe Erläuterungen zu Figur 2c) ist das Druckstück 27 mit dem vorspringenden Zapfen 28 versehen, der in das Gewindeloch des Befestigungselementes 26 einführbar und mit einem O-Ring umgeben ist, der von einer Nut in dem Zapfen 28 gehalten ist. Der O-Ring dient als Klemmstück und drückt von innen her gegen die Oberfläche des Gewindelochs des Befestigungselementes 26 und hält dieses damit lösbar fest.

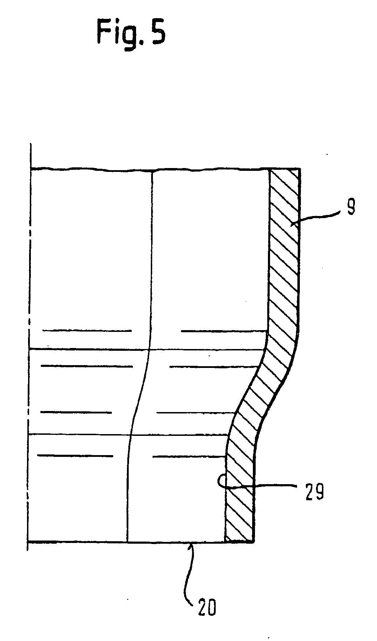

Am Ende des Verschiebens des Befestigungselementes 1 bzw. 26 in die in den Figuren 2d bzw. 3c dargestellte Reibschweißposition muss das Befestigungselement über sein Mehrkantprofil so festgehalten werden, dass es nicht aus der Ringaufnahme herausrutscht und möglichst spielfrei bei der Rotation gehalten wird. Zu diesem Zweck ist das Ende 20 (siehe Figur 2c) der Ringaufnahme 9 in besonderer Weise gestaltet, wie dies in der Figur 5 dargestellt ist. Danach liegt an dem genannten Ende 20 eine solche Verengung 29 vor, dass einerseits ein Befestigungselement mit seinem Mehrkantprofil glatt in die Reibschweißposition gelangen kann, in dieser aber über das Mehrkantprofil, das auch in der Ringaufnahme vorgesehen ist, satt gehalten wird, wozu für den betreffenden Bereich der Ringaufnahme eine ganz geringfügige Verjüngung existiert. Damit legt sich die Ringaufnahme 9 im Bereich dieser Verjüngung 29 satt um das Mehrkantprofil 17 eines Befestigungselementes an, hält dieses in der betreffenden Lage lösbar fest und gestattet damit bei dem Reibschweißvorgang mit der Aufnahme erheblicher Druck- und Rotationskräfte eine schlagfreie Drehung und damit sichere Reibverschweißung des betreffenden Bauelementes.

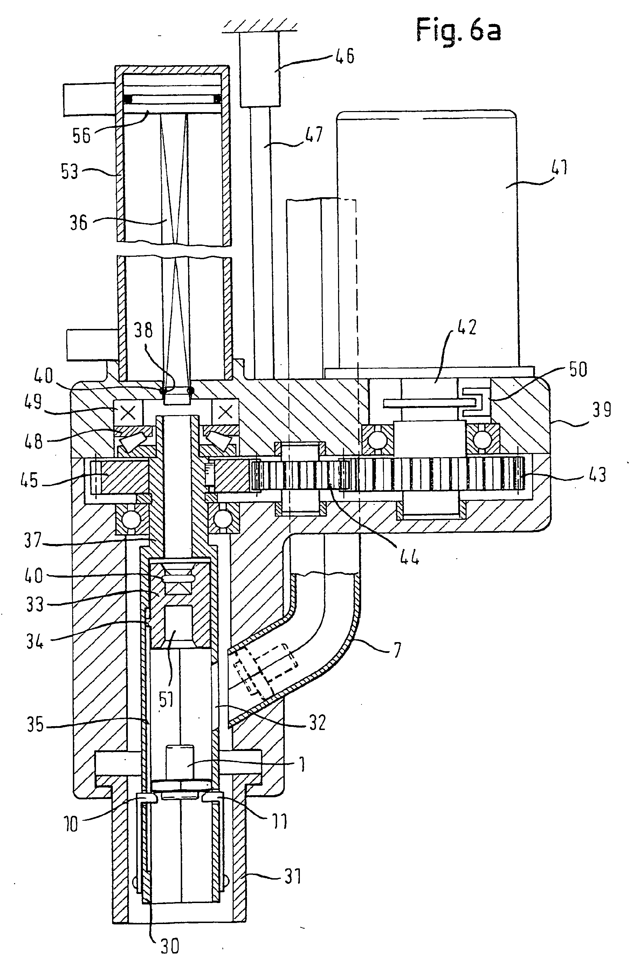

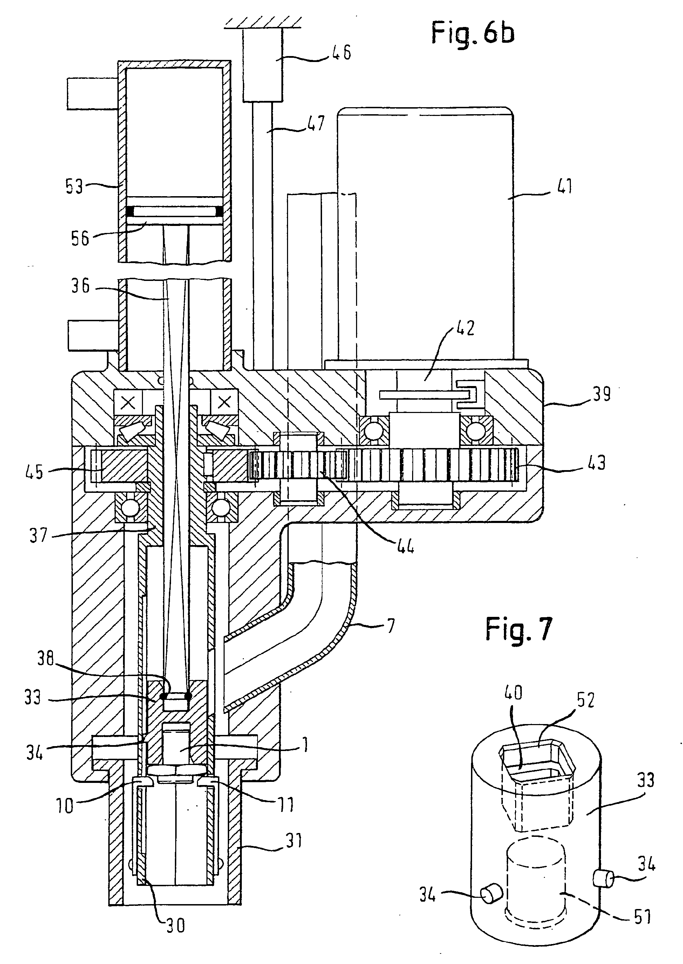

In der Figur 6a ist eine gegenüber der Gestaltung nach Figur 1 abgewandelte Vorrichtung zum Reibschweißen des Befestigungselementes 1 dargestellt, in der sich das Befestigungselement 1 in der Wartelage befindet. In diese Wartelage war das Befestigungselement 1 aus der gestrichelt gezeichneten Position im Zuführrohr 7 überführt worden. Das Befestigungselement 1 wird in der dargestellten Wartelage durch die Stoppteile 10 und 11 gehalten, deren Funktion derjenigen der Stoppteile 10 und 11 gemäß Figur 2a bis d entspricht. Die Stoppteile 10 und 11 gemäß Figur 6a können bei Druck auf das Befestigungselement 1 seitlich nach außen nachgeben (siehe hierzu Beschreibung zu Figur 2b). Die Stoppteile 10 und 11 sind an der Ringaufnahme 30 befestigt, die in dem rohrförmigen Niederhalter 31 axial beweglich untergebracht ist. Zum Reibschweißen des Befestigungselementes 1 wird der Niederhalter 31 auf ein entsprechendes Werkstück (z.B. 5 in Figur 1) aufgesetzt. Der rohrförmige Niederhalter 31 ist von dem vorstehend erwähnten Zuführrohr 7 zur Zuführung von weiteren Befestigungselementen durchbrochen. Ein entsprechender Durchbruch 32 ist auch in der Ringaufnahme 30 vorgesehen. In der Ringaufnahme 30 ist das Druckstück 33 axial beweglich geführt, das von einem weiter unter beschriebenen Mechanismus auf das Befestigungselement 1 aufgesetzt und danach gegen ein Werkstück gedrückt werden kann, wie das weiter unten beschrieben ist. Das Druckstück 33 ist mit Nasen 34 versehen (siehe auch Figur 7), die in entsprechend geformte Nuten 35 in der Ringaufnahme 30 eingreifen, wodurch erreicht wird, dass sich bei einer Axialbewegung aus der in Figur 6a dargestellten Position in eine Position vor dem Reibschweißen das Druckstück 33 nicht gegenüber der Ringaufnahme verdrehen kann.

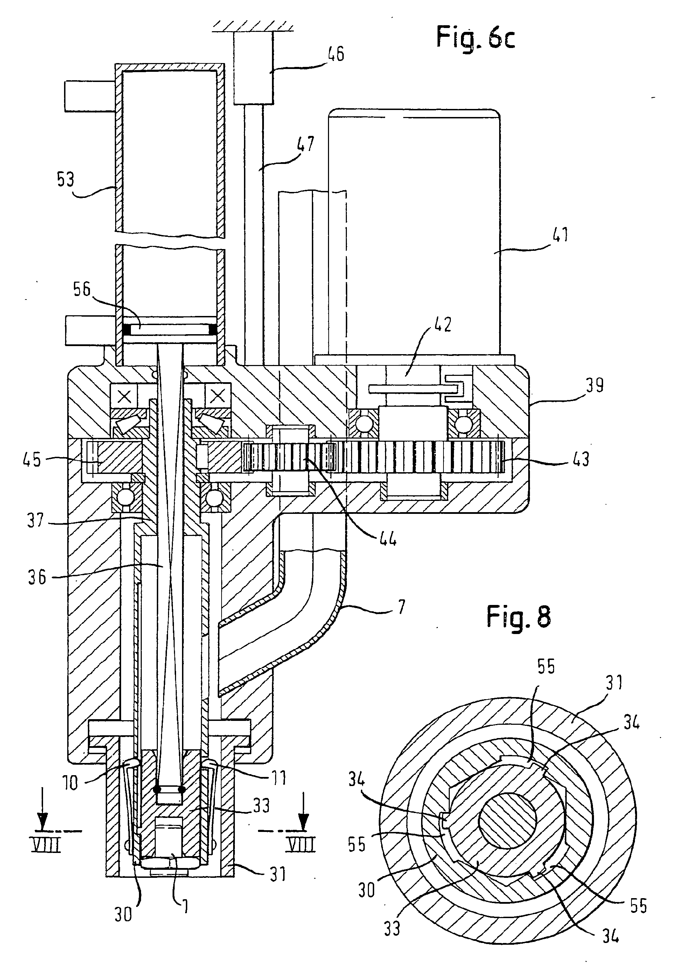

Die Überführung des in der Figur 6a in seiner Wartelage dargestellten Befestigungselementes 1 in die Reibschweißposition sei nunmehr anhand der Figuren 6b und 6c dargestellt.

Zunächst wird der als Vierkant ausgebildete Stößel 36 aus der in Figur 6a dargestellten Position in Richtung auf das Druckstück 33 verschoben. Der Vierkantquerschnitt des Stößels 36 ist in den Figuren 6a bis c symbolisch durch die gekreuzten Linien dargestellt. Bei einer weiter unten erwähnten Verdrehung der Verlängerung 37 der Ringaufnahme 30 wird der Stößel 36 nicht mitgedreht, da die Verlängerung 37 mit einem Rundloch ausgebildet ist. Der Stößel 36 ist an seinem dem Druckstück 33 zugewandten Ende mit dem Federring 38 versehen, der in entsprechende Aufnahmen in dem Gehäuse 39 (Bezugszeichen 40) und dem Druckstück 33 lösbar einrastet.

In der Figur 6b ist der Stößel 36 in einer abgesenkten Lage dargestellt, in der er über den eingerasteten Federring 38 das Druckstück 33 in der Wartelage hält. Bei der weiterhin erfolgenden Abwärtsbewegung des Stößels 36 nimmt dieser das Druckstück 33 unter seitlichem Wegdrücken der Stoppteile 10 und 11 mit (siehe Figur 6c), bis das Befestigungselement 1 in die in der Figur 6c dargestellte Reibschweißposition gelangt. Aus der dargestellten Position des Stößels 36 kann dieser nunmehr zurückgezogen werden. Für die Axialbewegung des Stößels 36 ist der Zylinder 53 mit dem in ihm geführten Kolben 56 vorgesehen, der pneumatisch betätigt wird. Hierbei handelt es sich um eine übliche Steuerung, auf die in diesem Zusammenhang nur prinzipiell eingegangen wird. Aufgrund der auf den Kolben 56 wirkenden pneumatischen Drücke wird der Kolben 56 im Zylinder 53 hin und her bewegt und nimmt damit den Stößel 36 entsprechend mit.

Das in der Reibschweißposition verbliebene Befestigungselement 1 (siehe Figur 6c) war vor der Zurückziehung des Stößels 36 in der erreichten Lage durch eine Verriegelung von Druckstück 33 und Ringaufnahme 30 verblieben. Hierzu wird das Druckstück 33 mit der Ringaufnahme 30 verriegelt.

Um diese Verriegelung durchzuführen, ist das Druckstück (33) mit den aus den Figuren 7 und 8 ersichtlichen Nasen 34 ausgestattet, die in entsprechende Nuten 55 der Ringaufnahme 30 unter gegenseitiger Verdrehung eingreifen, die zusammen mit den Nuten 34 nach Art eines Bajonettverschlusses funktionieren. Ringaufnahme 30 und Druckstück 33 sind damit axial miteinander verriegelt. Aus dieser Verriegelung und aus seiner Verrasterung mit dem Druckstück 33 (gegeben durch den Federring 38 und die Aufnahme 40) kann der Stößel 36 herausgezogen und in seine in der Figur 6a dargestellte rückwärtige Lage zurückgezogen werden.

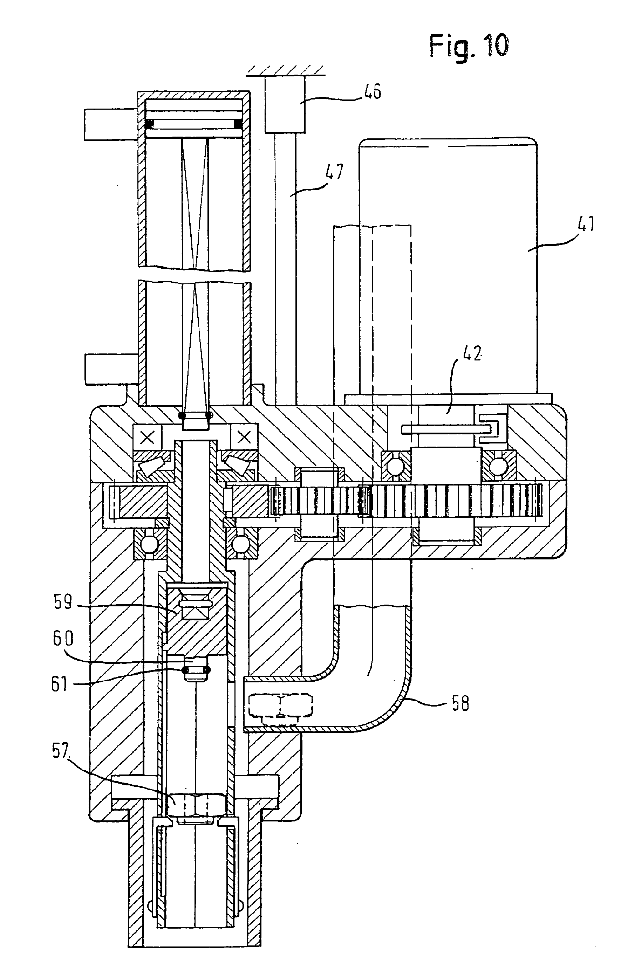

Zur Durchführung des Reibschweißvorganges wird die Ringaufnahme 30 in Drehung versetzt. Hierzu weist die in den Figuren 6a bis c dargestellte Vorrichtung einen Drehantrieb auf. Dieser besteht aus dem Elektromotor 41, der über seine Welle 42 das Zahnrad 43 dreht, das in das Übersetzungszahnrad 44 eingreift, welches seinerseits das Zahnrad 45 antreibt. Dieses Zahnrad 45 sitzt fest auf der Verlängerung 37 der Ringaufnahme 30. Bei Drehung des Elektromotors 41 wird entsprechend den durch die Zahnräder 43 und 45 gegebenen Übersetzungsverhältnissen die Ringaufnahme 30 in Drehung versetzt, die dann, wie weiter oben beschrieben, in der in der Figur 6c dargestellten Reibschweißposition wegen der Verriegelung mit dem Druckstück 33 dieses ebenfalls in Drehung versetzt, so dass das Befestigungselement 1 zusammen mit dem Druckstück 33 mit gleicher Drehzahl in Drehung versetzt werden, wobei durch Druck auf die Ringaufnahme 30, die diesen Druck aufgrund ihrer Verriegelung mit dem Druckstück 33 auf dieses überträgt, ein entsprechender Druck auf das Befestigungselement 1 ausgeübt wird, das auf diese Weise dann durch Reibschweißen mit einem nicht dargestellten Werkstück verbunden wird. Die Erzeugung dieses Druckes ist nicht Gegenstand der vorliegenden Erfindung. Ein den notwendigen Druck erzeugender Mechanismus ist in den Figuren 6a bis c und 10 prinzipiell dargestellt, wobei es sich um den Druckerzeuger 46 handelt, der stationär angeordnet ist, aus dem der Druckübertragungsstößel 47 herausragt, der direkt auf das Gehäuse 39 einwirkt. Im Übrigen sei bezüglich der Erzeugung des Druckes und der Verschiebung einer derartigen Vorrichtung auf die bereits oben erwähnte deutsche Patentanmeldung 10 2004 039 398.2 verwiesen.

Mit der durch den Druckübertragungsstößel 47 erfolgenden Verschiebung des Gehäuses 39 wird über die in dem Gehäuse 39 angeordneten Rollenlager 48 ein entsprechender Druck auf die Verlängerung 37 der Ringaufnahme 30 ausgeübt.

Wie sich aus den vorstehenden Darlegungen ergibt, ist während des Reibschweißvorganges der Mechanismus für die Verschiebung des Druckstücks 33 aus dessen Lage gemäß Figur 6a in die Lage gemäß Figur 6c nicht irgendwie in Rotation versetzt worden, d.h. dieser Mechanismus, bestehend im Wesentlichen aus dem Stößel 36 und dem Kolben 56 geht hinsichtlich seines Trägheitsmomentes nicht in das Trägheitsmoment der beim Reibschweißen in Drehung versetzten Teile ein, wodurch die Steuerung des Reibschweißvorganges entsprechend erleichtert wird.

Es sei noch darauf hingewiesen, dass für eine sinnvolle Regelung des Reibschweißvorganges es erforderlich sein kann, den auf die Ringaufnahme 30 wirkenden Druck und die jeweilige Drehzahl des Elektromotors 41 zu messen. Hierzu sind als Widerlager für das Rollenlager 48 der ringförmig gestaltete Drucksensor 49 und der Drehzahlmesser 50 vorgesehen, der gleichzeitig auch die jeweilige Winkellage der Welle 42 und damit der Ringaufnahme 30 erkennen lässt. Diese Winkellage ist darum kritisch, weil bei der Bewegung und der Verriegelung des Druckstücks 33, wie in Figur 6c dargestellt, dieses in der richtigen Lage von der Ringaufnahme 30 erfasst werden muss.

Figur 7 zeigt in perspektivischer Darstellung das Druckstück 33, das auf seiner dem Befestigungselement 1 zugewandten Seite das runde Loch 51 und demgegenüber auf der anderen Seite das Vierkantloch 52 aufweist. In dieses Vierkantloch 52 passt der Stößel 36, der bei seiner Verdrehung das Druckstück 33 mitnimmt. Diese Rotation ist erforderlich, damit das Druckstück 33 mit seinen Nasen 34 in die Ringaufnahme 30 einrasten kann.

In der Figur 8 sind die Ringaufnahme 30 und das Druckstück 33 im Schnitt längs der Linie IIX-IIX dargestellt. Daraus ist ersichtlich, wie das mit drei Nasen 34 ausgestattete Druckstück 33 in entsprechende Radialnuten 55 des Druckstücks 33 eingreift, die zusammen mit den Nasen 34 nach Art eines Bajonettverschlusses funktionieren.

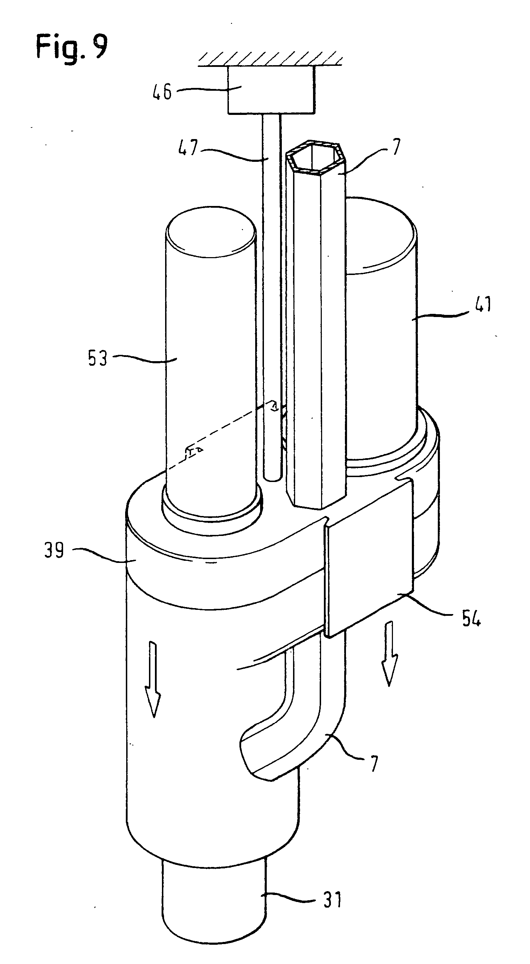

In der Figur 9 ist in einer Gesamtdarstellung die Vorrichtung gemäß den Figuren 6a bis c dargestellt. Daraus ist ersichtlich, wie aus dem Gehäuse 39 der Zylinder 53 herausragt, der, wie weiter oben beschrieben, als Führung und Antrieb für die Bewegung des Stößels 36 vorgesehen ist. Weiterhin zeigt Figur 9 den rohrförmigen Niederhalter 31 sowie das aus dem Gehäuse 39 herausragende Rohr 7 für die Zuführung von Befestigungselementen 1. Neben dem dem Zylinder 53 zugewandten Ende des Gehäuses 39 ist in einem Ansatz 54 das aus den Zahnrädern 43, 44 und 45 bestehende Getriebe (siehe Fig. 6a) untergebracht, auf das der Elektromotor 41 wirkt. Schließlich zeigt die Figur 9 noch den stationär angeordneten Druckerzeuger 46 mit dem von ihm betätigten Druckübertragungsstößel 47.

In der Figur 10 ist eine Vorrichtung beschrieben, die weitgehend derjenigen gemäß den Figuren 6a bis c entspricht, jedoch für die Verarbeitung von als Muttern 57 ausgebildeten Befestigungselementen ausgebildet ist. Die Zuführung der Mutter 57 war über das Zuführrohr 58 erfolgt, in dessen Ende die zuvor dort wartende Mutter in gestrichelter Zeichnungsweise dargestellt ist. Die in der Wartelage positionierte Mutter 57 ruht, wie beim Ausführungsbeispiel gemäß Figur 6a das dort als Bolzen ausgebildete Befestigungselement 1, auf den Stoppteilen 10 und 11. Zum Erfassen der Mutter 57 ist das Druckstück 59 mit dem Vorsprung 60 versehen, auf den der Federring 61 aufgerastet ist. Dieser Federring kann in eine entsprechende Nut in der Mutter 57 eingerastet werden. Hierzu wird analog der zu den Figuren 6a bis c dargestellten Vorgehensweise das Druckstück 59 abgesenkt und mit der Mutter 57 verrastet, woraufhin dann die Vorgänge der Überführung in die Reibschweißposition und der weiteren Verarbeitung in der gleichen Weise ablaufen, wie im Zusammenhang mit den Figuren 6a bis c beschrieben.

## Patentansprüche

1. Futter (2) zur Halterung von jeweils mit einer radialen Druckfläche (19) und einem Mitnahmeprofil (17) versehenen Befestigungselementen (1, 26) für eine Reibschweißverbindung an einem Bauteil (5) und zur Übertragung von auf ein Befestigungselement (1, 26) wirkenden Rotations- und Druckkräften, wobei in dem Futter (2) zur Übertragung der Rotationskraft eine ein Mehrkantprofil aufweisende Ringaufnahme (9) vorgesehen ist, die das ein axiales Mehrkantprofil (17) aufweisendes, eingeführtes Befestigungselement (1, 26) satt umfasst, **dadurch gekennzeichnet, dass** das Futter (2) ein in der Ringaufnahme (9) rückziehbares Druckstück (18, 27) aufweist, das zur Aufnahme eines Befestigungselementes (1, 26) durch eine seitliche Öffnung (12) an der Ringaufnahme (9) bis hinter die Öffnung (12) zurückziehbar ist und das von der Ringaufnahme (9) geführt ist, wobei an die seitliche Öffnung ein Zuführkanal angeschlossen ist, und der Zuführkanal (7) und die Ringaufnahme (9) das Mehrkantprofil für ein Befestigungselement (1, 26) aufweisen, das von in Abstand vom Ende des Zuführkanals vorgesehenen, radial nach innen ragenden rückziehbaren Stoppteilen (10, 11) in einer Wartelage aufhaltbar ist wobei die Stoppteile (10, 11) mit einer konischen Auflagefläche (21, 22) für ein zugeführtes, in der Wartelage gehaltenes Befestigungselement (1, 26) versehen sind und beim Verschieben eines Befestigungselementes (1, 26) in die Reibschweißposition von dem Befestigungselement (1, 26) seitlich weggedrückt werden, und dass für die Verschiebung des Druckstücks (33, 59) ein axial in der Ringaufnahme (30) verschiebbarer, nicht verdrehbarer Stößel (36) vorgesehen ist, der in das Druckstück (33, 59) auf dessen dem Befestigungselement (1, 57) abgewandten Seite axial mitnahmesicher und lösbar eingreift, und dass das Druckstück (33, 59) mit Erreichen der Reibschweißposition des Befestigungselementes (1, 57) sich mit der Ringaufnahme (30) derart verriegelt, dass die Ringaufnahme (30) die auf diese wirkenden Rotationskräfte zusammen mit den Druckkräften auf das Druckstück (33, 59) überträgt, wobei der Stößel (36) von dem Druckstück (33, 59) gelöst ist

2. Futter nach Anspruch 1, **dadurch gekennzeichnet, dass** die Ringaufnahme (9) ihre Umfassungsöffnung in Richtung vom Druckstück (18, 27) weg bis zur Anlage an das Befestigungselement (1, 26) verengt.

3. Futter nach Anspruch 1 oder 2, **dadurch gekennzeichnet, dass** das Druckstück (18) zur Verarbeitung eines bolzenartigen Befestigungselementes (1) im Bereich seiner Bohrung (23) ein in diese teilweise hineinragendes Klemmstück (24) aufweist, das einen von der Bohrung (23) aufgenommenen Schaft des Befestigungselementes (1) in der Wartelage leicht lösbar einklemmt.

4. Futter nach Anspruch 1 oder 2, **dadurch gekennzeichnet, dass** das Druckstück (27) zur Verarbeitung eines mutterartigen Befestigungselementes (26) einen axial vorspringenden Zapfen (28) aufweist, der bei Andrücken des Druckstücks (27) an das Befestigungselement (26) in der Wartelage mit einem Klemmstück in das Gewindeloch des mutterartigen Befestigungselementes (26) hineinragt und sich in diesem lösbar einklemmt.

## Claims

1. A chuck (2) for retaining fixing elements (1, 26) having a radial pressure surface (19) and a screw head profile (17) each, for obtaining a friction-welded connection to a component part (5) and for transferring rotational and pressure forces acting on a fixing element (1, 26), with an annular holding fixture (9) having a polygon profile being provided in said chuck (2) for transferring the rotational force, which annular holding fixture (9) fully encloses the fixing element (1, 26) that has an axial polygon profile (17) and has been introduced into it **characterized in that** said chuck (2) includes a pressure piece (18, 27) which is retractable within said annular holding fixture (9) and can be retracted to behind a lateral aperture (12) provided in said annular holding fixture (9) for introducing a fixing element (1, 26) via said aperture (12) and which is guided by said annular holding fixture (9), with a feed channel (7) being connected to said lateral aperture, and said feed channel (7) and said annular holding fixture (9) having the appropriate polygon profile for a fixing element (1, 26) which can be retained in a waiting position thereof by retractable stopper elements (10, 11) that are provided at a position spaced from the end of the feed channel and protrude radially toward the interior, which stopper elements (10, 11) exhibit conical contact surfaces (21, 22) for a fixing element (1, 26) that has been introduced and is being held in the waiting position, and will be pushed away laterally by a fixing element (1, 26) as the latter is being moved into the friction-welding position, and that for moving the pressure piece (33, 59) a push rod (36) is provided which can be moved axially within said annular holding fixture (30) and cannot be twisted, said push rod (36) axially engaging said pressure piece (33, 59) on its side facing away from the fixing element (1, 57) in a reliable and detachable manner, and that the pressure piece (33, 59) - once the fixing element (1, 57) has reached the friction-welding position - will lock with the annular holding fixture (30) in such a way that said annular holding fixture (30) will transfer the rotational forces acting on it together with the pressure forces to the pressure piece (33, 59), with the push rod being disengaged from the pressure piece (33, 59).

2. The chuck of claim 1 **characterized in that** the enclosing aperture of said annular holding fixture (9) narrows in the direction leading away from said pressure piece (18, 27) until it abuts on the fixing element (1, 26).

3. The chuck of claims 1 or 2 **characterized in that** in the area of its bore (23), said pressure piece (18) includes a clamping piece (24) which partially projects into said bore for processing a bolt-like fixing element (1), which clamping piece (24) clamps a shank of said fixing element (1) in an easily detachable manner after said shank has been introduced into said bore (23) and the fixing element (1) has reached a waiting position.

4. The chuck of claims 1 or 2 **characterized in that** the pressure piece (27) for processing a nut-like fixing element (26) includes an axially protruding pin (28) which -as the pressure piece (27) is being pressed onto the fixing element (26) in a waiting position thereof by means of a clamping piece - will project into the threaded hole of said nut-like fixing element (26) and will get detachably clamped within it.

## Revendications

1. Mandrin (2) pour le support d'éléments de fixation (1, 26) dotés chacun d'une surface de pression radiale (19) avec profil d'entraînement (17) pour une liaison de soudage par friction à une pièce structurelle (5) et pour le transfert de forces de rotation et de pression à un élément de fixation (1, 26), l'intérieur du Mandrin (2) étant, pour le transfert de la force de rotation, pourvu d'un anneau d'accrochage (9) avec profil à arêtes multiples (17) qui entoure complètement l'élément de fixation (1, 26) inséré et pourvu d'un profil à arêtes multiples (17) axial, **caractérisé en ce que** le Mandrin (2) présente un élément de pression (18, 27), rétractable dans l'anneau d'accrochage (9), pouvant se rétracter par une ouverture latérale (12) de l'anneau d'accrochage (9) jusqu'à l'arrière de l'ouverture (12) pour la préhension de l'élément de fixation (1, 26) et qui est dirigé par l'anneau d'accrochage (9), un canal d'amenée étant connecté à l'ouverture latérale, et le canal d'amenée (7) ainsi que l'anneau d'accrochage (9) présentant un profil à arêtes multiples pour un élément de fixation (1, 26) qui peut être maintenu en position d'attente par des butées d'arrêt (10, 11) situées à l'écart du canal d'amenée et rétractables transversalement vers l'intérieur, les butées d'arrêt (10, 11) étant pourvues d'une surface d'appui en forme de cône (21, 22) pour un élément de fixation (1, 26) inséré et maintenu en position d'attente et étant poussées latéralement en position de liaison de soudage par friction par l'élément de fixation (1, 26) lorsque l'un des éléments de fixation (1, 26) est déplacé ; et que, en vue du déplacement de la pièce à pression (33, 59), est prévu un poussoir (36) non rotatif, pouvant être déplacé de façon axiale dans l'anneau d'accrochage (30), qui intervient dans la pièce de pression (33, 59) sur sa paroi opposée à l'élément de fixation (1, 57) de façon axiale avec adhésion et entraînement ; et que la pièce de pression (33, 59), lorsque l'élément de fixation (1, 57) atteint sa position de liaison de soudage par friction, se verrouille avec l'anneau d'accrochage (30) de façon à ce que l'anneau d'accrochage (30) transmette la force de rotation qui agit sur ce dernier ainsi que les forces de pression sur la pièce de pression (33, 59), le poussoir (36) étant détaché à ce moment de la pièce de pression (33, 59).

2. Mandrin selon la revendication 1, **caractérisé en ce que** l'anneau d'accrochage (9) resserre son ouverture d'encadrement dans la direction opposée à la pièce de pression (18, 27) jusqu'à ce qu'elle soit appuyée contre l'élément de fixation (1, 26).

3. Mandrin selon les revendications 1 ou 2, **caractérisé en ce que** la pièce de pression (18) présente, en vue du traitement d'un élément de fixation en forme de boulon (1), une pièce de serrage (24) dans la zone de son perçage (23) qui s'étend partiellement dans celle-ci et qui vient pincer, en position d'attente et avec une adhérence légère, un arbre de l'élément de fixation (1) pris par le perçage (23).

4. Mandrin selon les revendications 1 ou 2, **caractérisé en ce que** la pièce de pression (27) présente, en vue du traitement d'un élément de fixation en forme d'écrou (26), une broche (28) saillante qui, lorsque la pièce de pression (27) pousse sur l'élément de fixation (26) dans la position d'attente, avance avec une pièce de serrage dans le trou taraudé de l'élément de fixation (26) en forme d'écrou, puis vient s'y coincer avec adhérence.
